# EUROPÄISCHE PATENTSCHRIFT

(11) **EP 2 596 541 B1**
(45) Veröffentlichungstag und Bekanntmachung des Hinweises auf die Patenterteilung: **25.02.2015**
(21) Anmeldenummer: 11741424.3
(22) Anmeldetag: 20.07.2011
(51) Int. Cl.: H01M 8/06, H01M 8/00, B64D 27/02, B64D 27/24, C01B 3/04, C01B 3/06, B64D 41/00, H01M 8/10

(54) **WASSERSTOFFERZEUGUNG MITTELS HYDRIERTEN POLYSILANEN ZUM BETRIEB VON BRENNSTOFFZELLEN**
HYDROGEN GENERATION BY MEANS OF HYDROGENATED POLYSILANES FOR OPERATING FUEL CELLS
PRODUCTION D'HYDROGÈNE AU MOYEN DE POLYSILANES HYDROGÉNÉS, POUR LE FONCTIONNEMENT DE PILES À COMBUSTIBLE

(30) Priorität: 23.07.2010 DE 102010032075
(43) Veröffentlichungstag der Anmeldung: 29.05.2013
(73) Patentinhaber: Spawnt Private S.à.r.l., 1148 Luxembourg (LU)
(72) Erfinder: STEINWANDEL, Jürgen, 88690 Uhldingen-Mühlhofen (DE); GODULA-JOPEK, Agata, 82024 Taufkirchen (DE); WOLFF, Christian, 85521 Ottobrunn (DE); BAUCH, Christian, 06774 Muldenstein (DE); LIPPOLD, Gerd, 04179 Leipzig (DE); DELTSCHEW, Rumen, 04319 Leipzig (DE); HOLL, Sven, 65558 Gückringen (DE); MOHSSENI, Javad, 06766 Bitterfeld-Wolfen (DE)
(74) Vertreter: Epping - Hermann - Fischer
(86) Internationale Anmeldenummer: PCT/EP2011/062466
(87) Internationale Veröffentlichungsnummer: WO 2012/010639

(56) Entgegenhaltungen:
- EP-A2- 0 957 026
- WO-A2-2007/019172
- WO-A2-2008/014999
- WO-A2-2009/023535
- DE-A1-102005 051 583
- US-A1- 2003 075 643

## Beschreibung

### Gebiet der Erfindung

Die Erfindung betrifft die Wasserstofferzeugung in Luftfahrzeugen. Insbesondere betrifft die Erfindung eine Brennstoffzellenversorgungsvorrichtung zum Erzeugen von Wasserstoff für Brennstoffzellen in einem Luftfahrzeug, die Verwendung einer Brennstoffzellenversorgungsvorrichtung in einem Luftfahrzeug, ein Luftfahrzeug mit einer Brennstoffzellenversorgungsvorrichtung und ein Verfahren zum Erzeugen von Wasserstoff für Brennstoffzellen in einem Luftfahrzeug.

### Hintergrund der Erfindung

Brennstoffzellen sind bekannt als effiziente Technologie zur Erzeugung von elektrischem Strom. Mit Brennstoffzellen kann mittels gasförmigen Energieträgern wie Wasserstoff oder verdampfte flüssige Kraftstoffe auf elektrochemischem Wege direkt chemische Energie in elektrische Energie umgewandelt werden. Werden Brennstoffzellen auf Wasserstoff-Sauerstoffbasis verwendet, können sie neben der Stromerzeugung auch zur Wassergenerierung genutzt werden.

Wasserstoff selbst ist ungiftig und verflüchtigt sich schnell. Es bedarf extremer Kühlung (-253 °C), um Wasserstoff in Kryospeichern in Flüssigform aufbewahren zu können. Da Wasserstoff in der Natur nicht als Rohstoff vorkommt, wird Wasserstoff überwiegend über chemische Verfahren aus wasserstoffhaltigen Verbindungen wie Kohlenwasserstoffen hergestellt. Allerdings benötigen bestimmte Brennstoffzellen wie beispielsweise Polymerelektrolyt (PEM: Proton Exchange Membrane) -Brennstoffzellen oder Alkalische Brennstoffzellen Wasserstoff von sehr hoher Reinheit. Schon geringe Mengen an anderen Gasen und sonstige Verunreinigungen des Wasserstoffes beeinträchtigen die Leistungsfähigkeit der Brennstoffzellen. Der erforderliche Reinheitsgrad des Prozesswasserstoffgases wird bei den üblichen Reformierungsverfahren unter Nutzung von beispielsweise Kohlenwasserstoffen oder auch Alkoholen nicht erreicht. Es ist deshalb bei Reformierungsverfahren von beispielsweise Erdgas ein großer technischer Aufwand für die Reformierung erforderlich, so dass diese PEM-Brennstoffzellenversorgungstechnik in der Praxis nur für stationäre Anlagen geeignet ist.

Für den Einsatz an Bord von Transportfahrzeugen, wie beispielsweise Kraftfahrzeuge oder Luftfahrzeuge wie in der DE 10 2005 051 583 beschrieben, sind Brennstoffzellen bekannt, die eine Wasserstoffgaselektrode enthalten und für den Betrieb eine Zugabe von Wasserstoffgas erfordern. Die Bereitstellung von Wasserstoff an Bord eines mobilen Fahrzeuges kann beispielsweise durch klassische Speicher wie Druckbehälter oder Kryospeicher erfolgen. Jedoch ist insbesondere für die Luftfahrt die Verwendung von klassischen Speichern wie Kryospeichern oder Druckbehältern für Flugzeuge sowohl aus Sicherheitsgründen als auch aus Kapazitätsgründen begrenzt. Weiterhin sind chemische Konverter wie die Wasserdampfreformierung, eine partielle Oxidation und eine autotherme Reformierung möglich. Die genannten chemischen Konverter benötigen jedoch Hilfsstoffe wie Wasser oder Sauerstoff oder beides. Darüber hinaus setzen insbesondere Brennstoffzellen des Typs PEM Prozesswasserstoffgas hoher Reinheit voraus und benötigen somit neben der Reformierung weitere Gasreinigungsverfahren, um beispielsweise Kohlenmonoxid (CO) abzutrennen.

Weiterhin ist ein Verfahren in der DE 100 59 625 beschrieben, immer längerkettigere und schließlich höherer Silane herzustellen, die als nichtselbstentzündliche Treibstoffe verwendet werden können. Als Energieträger können Silane gemäß WO2008/000241 durch Pyrolyse unter Ausschluss von Sauerstoff bzw. Luft sowohl zur Reinigung des Siliciums als auch zur Lieferung von Wasserstoff für den Betrieb von Brennstoffzellen verwendet werden.

Aus den Druckschriften WO2008/014999 A2, WO2009/023535 A2 und WO2007/019172 A2 sind Verfahren zur Versorgung einer Brennstoffzelle mit Wasserstoff bekannt, der durch Zersetzung von Silanen oder Polysilanen erzeugt wurde. Die Druckschrift US2003/0075643 A1 gibt ein elektrisch angetriebenes Luftfahrzeug an, in dem die elektrische Energie wenigstens teilweise mit einer Brennstoffzelle erzeugt wird. Der hierfür benötige Wasserstoff kann unter anderem durch Zersetzung einer wässrigen NaBH₄ Lösung gewonnen werden.

### Zusammenfassung der Erfindung

Es ist Aufgabe der Erfindung, eine einfache und sichere Wasserstoffversorgung von Brennstoffzellen in Luftfahrzeugen bereitzustellen.

Die Aufgabe wird gelöst durch den Gegenstand der unabhängigen Ansprüche, wobei weitere Fortbildungen in den abhängigen Ansprüchen verkörpert sind. Die im Folgenden beschriebenen Ausführungsformen beziehen sich sowohl auf ein Luftfahrzeug mit einer Brennstoffzellenversorgungsvorrichtung, eine Verwendung einer Versorgungsvorrichtung in einem Luftfahrzeug, eine Verwendung einer Wasserstoffversorgungsvorrichtung als Notfallsystem, und einem Wasserstofferzeugungs verfahren für Brennstoffzellen in Luftfahrzeugen.

Die Brennstoffzellenversorgungsvorrichtung weist eine Reaktionskammer auf, die ausgelegt ist, hydriertes Polysilan oder Mischungen davon mit Wasser umzusetzen. Weiterhin sind eine Zuleitungsvorrichtung zum Zuführen von mindestens einem Reagenz in die Reaktionskammer und eine Ableitungsvorrichtung zur Ableitung des bei der Umsetzung entstehenden Wasserstoffes von der Reaktionskammer und zur Zuleitung dieses Wasserstoffes zu einer Brennstoffzelle vorgesehen.

Auf diese Weise kann der in hydrierten Polysilanen gebundene Wasserstoff für den Betrieb einer Brennstoffzelle abgespaltet werden. Das hydrierte Polysilan ist eine untoxische Substanz, die im Wesentlichen aus Silicium und Wasserstoff besteht. Bei der Wasserstofferzeugung aus hydrierten Polysilan kann bei entsprechendem Reinheitsgrad auf eine Nachreinigung verzichtet werden, so dass es beispielsweise in einer PEM-Brennstoffzelle unmittelbar verwendet werden kann. Als Polysilane werden im gesamten Kontext der Erfindung allgemein Verbindungen mit der Summenformel SiₙH₂ₙ oder SiₙH₂ₙ₊₂ bezeichnet, wobei n größer sechs ist (n > 6). Unter hydrierten Polysilanen, die im Folgenden auch mit der Kurzform HPS bezeichnet werden, sind unter Standardbedingungen Polysilane in fester Form zu verstehen. Als in fester Form im Sinne der Erfindung werden Polysilane bezeichnet, die als einzelne Verbindung fest sind oder die in einer Mischung mehrerer Polysilane fest sind. Standardbedingungen im Kontext der Erfindung sind ein Druck von einer physikalischen Atmosphäre (p = 1 atm = 101,325 kPa) und eine Temperatur (Standardtemperatur) von zwanzig Grad Celsius (T = 20 °C). Diese hydrierten Polysilane bzw. HPS und Mischungen davon können beispielsweise nach DE 2006 043 929 A1 hergestellt werden, wobei die Si-Ketten beziehungsweise das Si-Grundgerüst eine Anzahl an Si-Atomen im Molekül von n>10 oder n>12 aufweisen. HPS mit Si-Kettenlängen von mindestens elf Siliciumatomen, in anderen Worten ab dem Undecasilan, ist nicht mehr pyrophor und kann beispielsweise als weiß-gelbliches, festes Pulver vorliegen.

Durch die feste Form des HPS ist eine einfache und sichere Handhabung des Wasserstoffspeichermaterials möglich. HPS kann gut gespeichert werden und unterschiedliche Packungsdichten je nach Formgebung des Materials (Pulver, Pellets, Granulat, Kugeln, Würfeln) erreichen. Auf diese Weise kann HPS in fester Form gespeichert werden und erst zur Überführung in die Reaktionskammer in einer Flüssigkeit dispergiert werden oder mit einem Lösungsmittel mobilisiert werden. Ferner besteht die Möglichkeit das HPS mit einer entsprechenden Feststofffördereinrichtung in die Reaktionskammer direkt einzubringen.

Der HPS-Speicher kann als permanenter Wasserstoffträger im Wesentlichen sicher an verschiedene Orte transportiert bzw. dort gelagert werden und nach Überführung in die Reaktionskammer je nach Bedarf Wasserstoff erzeugen. Der durch die Umsetzung des HPS mit Wasser erzeugte Wasserstoff kann daraufhin mit effizienten Brennstoffzellensystemen in elektrische Energie umgewandelt werden. Dabei ist nicht nur die Handhabung und Speicherung des festen HPS einfach und sicher. Die Reaktionsführung erfordert nach der Zugabe eines basischen Reagenz, bevorzugt alkalisches Reagenz, nur einen einzigen Umsetzungsschritt, um Wasserstoff zu erzeugen. Auf die Zugabe von Basen kann verzichtet werden, wenn der Basengehalt des Reaktionsgefäßes selbst die Umsetzung ausreichend katalysieren kann. Bei der Umsetzung von HPS mit Wasser in Gegenwart von Alkalien kann lösliche Kieselsäure Si(OH)₄ oder kolloidale Polykieselsäuren entstehen, die ebenfalls ungefährlich sind.

Auf diese Weise ist HPS ein effizienter Wasserstoffträger, der verlustfrei transportiert und verhältnismäßig sicher gelagert werden kann. Im Vergleich zum elementaren Silicium ist HPS als Wasserstoffträger besser geeignet, da bezogen auf die Eduktmasse mehr Wasserstoff freigesetzt werden kann. Mit einer Wasserstofffreisetzung von ca. 20 Gewichts-% bezogen auf eingesetztes HPS eignet sich hydriertes Polysilan als Wasserstofflieferant sowohl für stationäre als auch mobile Anwendungen. Aufgrund des hohen Reinheitsgrades des mittels HPS und Wasser erzeugten Wasserstoffes eignet sich dieser Wasserstoffspeicher insbesondere in Kombination mit PEM-Nieder- und/oder Hochtemperatur-Brennstoffzellen.

Gemäß einem Ausführungsbeispiel der Erfindung Liegt das hydrierte Polysilan in einer festen Struktur vor, die ausgewählt ist aus der Gruppe bestehend aus Pulver, Granulat, Pellets, Kugeln, Würfeln und poröse Stücke.

Das HPS kann somit auf eine sichere und einfache Weise gespeichert werden und anschließend durch eine Zuleitungsvorrichtung in die Reaktionskammer eingeführt werden. Eine verschließbare Öffnung kann für das Nachfüllen von beispielsweise pulverförmigen HPS verwendet werden. Tritt das HPS mit beispielsweise einer alkalischen wässrigen Lösung in Kontakt, wird das HPS mit Wasser reagieren und es entsteht Wasserstoff als Produkt. Auf diese Weise kann Wasserstoff in einem einzigen Reaktionsschritt erzeugt werden. Bei der Umsetzung des HPS mit der basischen wässrigen Lösung entsteht Wärme, die wiederum vorteilhaft genutzt werden kann, indem die Abwärme in einem Wärmeaustauscher geleitet wird.

Wird das HPS in einer alkalischen wässrigen Lösung beispielsweise als Pulver dispergiert, kann die Reaktion gleichmäßig verteilt in der Reaktionskammer erfolgen, wenn eine Mischvorrichtung wie ein Rührer oder eine Umwälzpumpe in der Reaktionskammer eine homogene Durchmischung bewirken. Alternativ kann ein Zwischenboden vorgesehen werden, auf dem größere Pellets oder poröse Stücke aus HPS gesammelt werden. Die Zuleitungsvorrichtung zum Zuführen mindestens des Wassers ist auf Höhe des Zwischenbodens oder darüber mit Hilfe einer Sprühdüsenvorrichtung angeordnet, um den Kontakt des HPS mit dem Wasser zu gewährleisten. Das in der Reaktionskammer erzeugte Wasserstoffgas kann durch eine Ableitungsvorrichtung für Gas, die vorzugsweise an der Oberseite der Reaktionskammer angeordnet ist, direkt zu einer Brennstoffzelle bzw. Brennstoffzellenkombination geleitet werden.

Gemäß einem weiteren Ausführungsbeispiel wird eine Versorgungsvorrichtung bereitgestellt, wobei die Reaktionskammer ausgelegt ist, ein basisches, insbesondere ein alkalisches, Medium bereitzustellen.

Auf diese Weise kann die Wasserstoffproduktion realisiert und beschleunigt werden. Die Basizität des Wassers, das mit dem HPS reagiert, ist im pH-Bereich zwischen 7 und 14 gegeben und kann beispielsweise durch die Einführung von Natronlauge NaOH oder Kalilauge KOH eingestellt werden. Die Basen bzw. Alkalien können katalytisch auf die Hydrolyse des HPS einwirken. Bei der Verwendung von überstöchiometrischen Alkalienmengen kann eine schnelle und vollständige Umsetzung gewährleistet werden, ohne dass zwischenzeitlich flüchtige selbstentzündliche Silane entstehen. In der Reaktionskammer entsteht in einer wässrigen Lösung mit pH-Werten oberhalb von 7 bei der Zersetzung der Polysilane Wasserstoff H₂ und Silicatverbindungen wie beispielsweise Wasserglas, wie folgende auf die empirischen Verhältnisse vereinfachte Reaktionsgleichung beispielhaft für die Umsetzung für Polysilane mit der Summenformel SiₙH₂ₙ im alkalischen Medium (pH>7, überstöchiometrische Alkali-Menge) zeigt:

SiH₂ + 2 NaOH + H₂O → Na₂SiO₃ + 3 H₂.

Die basische bzw. alkalische wässrige Lösung kann dabei einerseits bereits außerhalb der Reaktionskammer durch Zumischung einer Base bzw. Alkalie in dem zugeführten Wasser erfolgen, das daraufhin durch die Zuleitungsvorrichtung in die Reaktionskammer zugeführt wird. Andererseits kann eine Base oder Alkalie oder Lauge erst in der Reaktionskammer beispielsweise mittels einer weiteren Zuführungsvorrichtung und angeschlossenem Vorratsbehälter für Basen, Alkalien und Laugen zugeführt werden, um daraufhin eine wässrige alkalische Lösung und ideale Reaktionsbedingungen in der Reaktionskammer herzustellen. Auf diese Weise wird nicht nur die Reaktivität des HPS erhöht, sondern auch die Löslichkeit der bei der Reaktion und Umsetzung gebildeten Kieselsäureprodukte verbessert. So kann sich beispielsweise gelöste Kieselsäure oder flüssige Silica-Sole bilden, welche von dem HPS abgetrennt und aus der Reaktionskammer abgeführt werden können.

Zur Abführung der fest bzw. flüssig vorliegenden Reaktionsprodukte kann der Boden der Reaktionskammer beispielsweise als Trichter mit verschließbarer Entnahmeöffnung ausgeführt sein. Ferner kann beispielsweise ein Zwischenboden mit Lochbohrungen, die kleiner sind als die Durchmesser der verwendeten HPS-Kugeln bzw. Pellets, vorgesehen werden, um das HPS in der Reaktionskammer zu halten, während Wasser und darin möglicherweise gelöste Substanzen abgeführt werden kann. Auf diese Weise können Kieselsäureprodukte wie beispielsweise Kieselsäure aus der Reaktionskammer einfach mit wässriger, gegebenenfalls alkalischer Lösung ausgespült werden oder als feste sedimentierte Reaktionsprodukte mechanisch entfernt werden.

Gemäß einem weiteren Ausführungsbeispiel der Erfindung weist die Reaktionskammer Metallkatalysatoren auf.

Anstelle der Basen bzw. Alkalien oder zusätzlich zu dem Zuschlag von Basen bzw. Alkalien können auch Katalysatoren eingesetzt werden, um die Reaktion zu beschleunigen. Dabei kommen beispielsweise Metallkatalysatoren der Übergangsmetall-Oxide in Betracht. Sie können allein oder als Mischoxide mit anderen Übergangsmetallen verwendet werden. Wirksame Aktivkomponenten sind beispielsweise Eisen-, Kupfer- oder Chromoxide. Die Katalysatoren können dabei als feste Struktur in der Reaktionskammer angeordnet sein oder nach Bedarf von außen zugeführt werden.

Gemäß einer weiteren Ausführungsform der Versorgungsvorrichtung weist die Versorgungsvorrichtung eine Abwärmenutzungsvorrichtung auf, die bei der Umsetzung freigesetzte Wärme nutzt.

Die Abwärme, die in der Reaktionskammer bei der exothermen Hydrolyse des HPS freigesetzt wird, kann beispielsweise durch einen Wärmetauscher oder andere Wärmerückgewinnungsvorrichtungen genutzt werden. Dabei kann die Reaktionskammer mit einem Mantel umgeben werden.

Gemäß einer weiteren Ausführungsform der Versorgungsvorrichtung weist die Versorgungsvorrichtung einen Wasservorratsbehälter zur Bereitstellung von Wasser an die Zuleitungsvorrichtung auf.

Mit Hilfe einer Fördervorrichtung wie eine Pumpe kann Wasser aus dem Wasservorratsbehälter in die Reaktionskammer transportiert werden. Zusätzlich kann ein Zulaufventil an der Zuleitungsvorrichtung zur Reaktionskammer vorgesehen werden. Auf diese Weise kann die bei der Umsetzung benötigte Wassermenge nach Bedarf zugeführt werden. In diesem Wasservorratsbehälter kann durch geeignete Zugabe von beispielsweise Natronlauge vor der Zuleitung in der Reaktionskammer eine alkalische wässrige Lösung hergestellt werden.

Gemäß einer weiteren Ausführungsform der Erfindung ist die Zuleitungsvorrichtung zur Kondensation und Zuleitung von Wasser zur Reaktionskammer oder zum Wasservorratsbehälter ausgeführt, wobei das Wasser (bzw. der Wasserdampf, der dann kondensiert wird) als Reaktionswasser in der Brennstoffzelle entsteht.

Brennstoffzellen auf Basis von Wasserstoff und Sauerstoff verwenden als Oxidationsmittel Sauerstoff in einer H⁺-Ionen leitenden Brennstoffzelle. Die in einer Wasserstoff-Sauerstoff-basierten Brennstoffzelle stattfindende Gesamtreaktion ist die Synthese von Wasser aus Wasserstoff und Sauerstoff:

2H₂+O₂ → 2H₂O

Auf diese Weise kann sowohl elektrische Energie als auch Wasser gewonnen werden, das durch die Zuleitungsvorrichtung abgeführt werden kann. In dieser Zuleitungsvorrichtung kann das Wasser auskondensieren und als Reagenz in flüssiger Form der Reaktionskammer direkt zugeführt werden. Auf diese Weise kann das in der Brennstoffzelle entstandene Wasser sowohl gasförmig als auch flüssig in die Reaktionskammer zurückgeführt werden und wiederverwendet werden.

Insbesondere beim Einsatz in Luftfahrzeugen ist dies von Vorteil, da dadurch weniger Wasservorrat notwendig ist und Gewicht eingespart werden kann.

Gemäß einer beispielhaften Ausführungsform der Erfindung weist die Ableitungsvorrichtung einen Druckbehälter mit einem Zulaufventil und einem Ablaufventil zum Zwischenspeichern des erzeugten Wasserstoffes auf.

Auf diese Weise kann der bei der Reaktion in der Reaktionskammer umgesetzte Wasserstoff gesammelt werden und zwischengespeichert werden. Über das Ablaufventil kann der Wasserstoff in die Brennstoffzelle nach Bedarf eingeführt werden und sofort elektrischer Strom erzeugt werden. Bei dem verwendeten Druckbehälter kann es sich um einen genormten Behälter handeln, der eine gesicherte Ventilvorrichtung zum geregelten Zu- und Ablauf des Wasserstoffgases aufweist. Die Ventile können zentral von einer Steuervorrichtung geregelt werden und sind automatisch in einer verschlossenen Stellung, wenn Stromausfälle oder Unterbrechungen auftreten. Auf diese Weise kann ein unkontrollierte Weiterführung des Wasserstoffgases in die Brennstoffzelle oder ein möglicher Wasserstoffverlust verhindert werden.

Gemäß einer weiteren beispielhaften Ausführungsform der Erfindung weist die Ableitungsvorrichtung eine Wasserstoffmessvorrichtung auf, die ausgelegt ist, die Qualität und/oder Quantität, insbesondere Durchfluss oder Druck, des erzeugten Wasserstoffes zu messen.

Auf diese Weise kann der Reinheitsgrad und die Reinheit sowie die Menge und/oder Druck des erzeugten Wasserstoffes überprüft werden. Die

Wasserstoffmessvorrichtung kann direkt in der Ableitungsvorrichtung oder in einer Wasserstoffabzweigleitung angeordnet sein. Ist die Messvorrichtung in einer Bypassleitung angeordnet, kann die Quantität und die Qualität des Wasserstoffes kontinuierlich oder stichprobenartig überprüft werden. Die zur Wasserstoffmessung benötigte Menge kann entweder in die Ableitungsvorrichtung zurückgeführt werden oder nach außen abgeführt werden. Als Messvorrichtung eignet sich beispielsweise ein Gaschromatograph, der sehr genau die Reinheit des Wasserstoffes nachweisen sowie die Wasserstoffmenge quantifizieren kann.

Wird als Messvorrichtung ein Gaschromatograph verwendet, wird ein Trägergas zugegeben und auf eine geeignete Trennsäule transportiert. Auf diese Weise kann das vermessene Gas aufgetrennt werden, wobei sich am Ende der Säule ein Detektor befindet, der ein elektronisches Signal erzeugt, wenn eine Substanz das Trennsystem verlässt. Das elektronische Signal kann daraufhin als sogenannter Peak auf einem geeigneten Gerät registriert und analysiert werden und detektierte Gaskomponenten sehr genau qualitativ und quantitativ bestimmen. Die Messsignale werden an ein Computersystem mit einer entsprechenden Auswertungssoftware weitergegeben. Da bei der Gaschromatographie Trägergase wie zum Beispiel Stickstoff verwendet werden, ist es bei dieser Messanordnung nicht vorgesehen das Messgas in die Ableitungsvorrichtung, die zur Brennstoffzelle führt, zurückzuleiten.

Weiterhin können andere Wasserstoffmessvorrichtungen verwendet werden, wie beispielsweise Messsensoren bzw. selektive Elektroden, die im Gegensatz zu einem Gaschromatrographen den Wasserstoffgehalt oder andere zur Überwachung relevante Spurengase kontinuierlich detektieren können.

In Abhängigkeit von den Messergebnissen der Wasserstoffmessvorrichtung kann die Umsetzung in der Reaktionskammer geregelt werden. Wird eine starke Qualitätsabnahme der Reinheit des Wasserstoffes gemessen, kann durch die Regelung des Ablaufventiles des Wasserstoffzwischenspeichers die Zuführung des Wasserstoffgases in die Brennstoffzelle unterbunden werden. Nachdem die Reaktionsbedingungen wieder optimal eingestellt worden sind, so dass der Reinheitsgrad für einen Betrieb in der Brennstoffzelle ausreicht, kann das verunreinigte Wasserstoffgas durch Austausch des Druckbehälters aus dem System entfernt werden und in einen leeren Druckbehälter wieder reines Wasserstoffgas zwischengespeichert werden.

Gemäß einem weiteren Ausführungsbeispiel der Erfindung weist die Ableitungsvorrichtung eine Abtrennungsvorrichtung für Wasserdampfreste und/oder Aerosole im Wasserstoffgas auf.

Durch die Wärmeentwicklung bei der exothermen Hydrolyse ist es möglich, dass unbeabsichtigt Wasserdampf und/oder Aerosole entstehen. Um die Reinheit des Wasserstoffgases zu gewährleisten, können durch eine Abtrennungsvorrichtung bzw.Trocknung eventuelle Wasserdampfreste von dem Wasserstoffgas abgetrennt werden. Die Trocknung kann beispielsweise auch mit Hilfe der bei der exothermen Reaktion entstandenen Wärme in der Reaktionskammer gekoppelt werden. Weiterhin können mitgerissene Aerosole wie z.B. Basentröpfchen, die für die Brennstoffzelle problematisch sein können, abgetrennt werden. Zur Abtrennung können beispielsweise partikelförmige Adsorptions- bzw. Trocknungsmittel auf Basis von anorganischen Oxide wie Siliciumdioxid (Silicagel), Aluminiumoxid oder Alumosilikat verwendet werden.

Gemäß einem weiteren Ausführungsbeispiel der Erfindung weist die Versorgungsvorrichtung eine Steuervorrichtung auf, die die Menge des erzeugten Wasserstoffes durch die Menge des zugegebenen Wassers steuert.

Durch die Steuerung der Menge des zugegebenen Wassers von außen kann die erzeugte Wasserstoffmenge kontrolliert gesteuert werden. Die bei der Reaktion auftretende Wärme kann dabei durch Steuerung der Wasserzugabe geregelt werden. Ist in der Reaktionskammer das HPS vorgelegt, können über die Dosierung einer bestimmten Menge wässriger Lösung oder auch über eine pH-Werteinstellung in unterschiedlichen Stufen Reaktionsparameter wie Reaktionsgeschwindigkeit gesteuert werden. Die Reaktionsprodukte wie beispielsweise Kieselsäure können daraufhin mit Zugabe von weiterer alkalischer Lösung ausgewaschen werden und durch eine geeignete Abführvorrichtung für Flüssigkeiten abgeleitet werden. Füllstandsensoren können beispielsweise kontrollieren, dass die Flüssigkeitsmenge in der Reaktionskammer einen bestimmten Sollwert nicht überschreitet.

Alternativ kann die Reaktionskammer derart ausgelegt sein, dass eine basische, insbesondere alkalische wässrige Lösung bereits vorliegt und durch Zugabe von festem HPS die Umsetzung zu Wasserstoff gesteuert wird. Hierzu eignen sich Fördervorrichtungen zum Transport von festen Materialien wie beispielsweise Schaufelräder. Dabei kann der Reaktor selbst auch zur Durchmischung bewegbar sein und beispielsweise als Kippreaktor ausgeführt sein, um eine gute Durchmischung der wässrigen Lösung mit dem HPS zu gewährleisten. Die zur Reaktion des HPS eingesetzte wässrige Lösung besteht entweder aus reinem Wasser oder Wasser mit Zusatzstoffen wie Basen bzw. Alkalien oder geeigneten Katalysatoren. Über geregelte Zugabe der Zusatzstoffe kann zusätzlich die freigesetzte Reaktionswärme reguliert werden.

Wird eine Rückführung des in der Brennstoffzelle entstandenen Wassers vorgesehen, kann generell die Menge des zwischengespeicherten Wassers reduziert werden, da das während dem Betrieb der Brennstoffzelle anfallende Abwasser zur Hydrolyse des HPS auch genutzt werden kann. Die Steuerung der Speichermenge der wässrigen Lösung bzw. der basischen bzw. alkalischen wässrigen Lösung kann bereits im Wasservorratsbehälter mit Hilfe der Steuerungsvorrichtung kontrolliert werden. Die Steuerungsvorrichtung kann auch so ausgelegt werden, dass nach einer Messung des pH-Wertes in dem Wasservorratsbehälter ein Abgleich mit einem vorgegebenen pH-Sollwert (z.B. pH = 10) erfolgt und erst nach Erreichen des gesetzten Wertes eine Weiterleitung der basischen Lösung in die Reaktionskammer über die Steuerung der Pumpe erfolgt.

Weiterhin können auch Sensoren in der Reaktionskammer angeordnet sein, die pH-Messungen, Ventilstellungen, Füllstand bzw. Wärmeerzeugung messen. Infolge der gemessenen Parameter kann daraufhin die Menge der Wasserzugabe bzw. bei Vorliegen der wässrigen Lösung die Menge der Zugabe des HPS oder von Zusatzstoffen kontrolliert und gesteuert werden.

Gemäß einem weiteren Ausführungsbeispiel der Erfindung wird die Brennstoffzellenversorgungsvorrichtung zur Wasserstoffversorgung von Brennstoffzellen in einem Luftfahrzeug verwendet.

HPS das aus Silicium-Wasserstoff-Verbindungen besteht und eine mittlere Kettenlänge mit mehr als zehn Siliciumatomen besitzt, ist nicht mehr selbstentzündlich und kann daher insbesondere für mobile Verwendungszwecke wie in der Luftfahrt verwendet werden. Diese hydrierten Polysilane können einfach gehandhabt, gespeichert und gelagert werden. Die Kombination mit einer Brennstoffzelle und diesem Wasserstoffenergieträger ist vorteilhaft, da das bei der Brennstoffzelle entstehende Wasser in der Reaktionskammer wiederverwendet werden kann. Auf diese Weise kann in einem Flugzeug Gewicht und Kosten eingespart werden.

Gemäß einem weiteren Ausführungsbeispiel der Erfindung wird die Brennstoffzellenversorgungsvorrichtung zur Wasserstoffversorgung von Brennstoffzellen als Notfallsystem in einem Luftfahrzeug verwendet.

Bei dieser Verwendung ist die Brennstoffzellenversorgungseinrichtung als Notfallsystem ausgeführt. Auf diese Weise kann auch bei einem Stromausfall an Bord eines Luftfahrzeuges gewährleistet werden, dass eine Wasserstofferzeugung und Betrieb der Brennstoffzelle gewährleistet ist. Hierzu sind die Ventile so ausgelegt, dass sie im Falle eines Stromausfalles die Stellung einnehmen, dass die Funktion der Brennstoffzellenversorgungseinrichtung erhalten bleibt. Ferner kann die HPS Brennstoffzellenversorgungsrichtung so ausgeführt sein, dass sie erst bei einem Notfall aktiviert wird. Auf diese Weise kann insbesondere bei einem Stromausfall der Standard-Stromversorgungssysteme die Stromversorgung mit HPS beispielsweise für wichtige Systeme des Luftfahrzeuges sichergestellt werden.

Gemäß einem weiteren Ausführungsbeispiel der Erfindung wird ein Luftfahrzeug bereitgestellt mit einer Brennstoffzellenversorgungsvorrichtung.

Die bei der Umsetzung von HPS mit Wasser entstehenden Kieselsäureprodukte sind bezogen auf die Umwelt unbedenklich und können leicht gelagert und entsorgt werden.

Entstehender reiner Wasserstoff kann insbesondere in der Luftfahrt für PEM-Brennstoffzellen genutzt werden. Auf diese Weise kann mit einem einzigen Reaktionsschritt und Kopplung mit einer Brennstoffzelle sehr schnell elektrische Energie gewonnen werden. Weiterhin kann ein Teil der frei werdenden Wärme aus dem Reaktor vorteilhaft genutzt werden, indem er beispielsweise einem Wärmetauscher zugeführt wird. Auf diese Weise kann die Wärme zurückgewonnen werden bzw. mehrfach genutzt werden. Wird die Brennstoffzelle ebenfalls mit einer Abwärmenutzungsvorrichtung ausgestattet, ist es möglich, die beiden Abwärmenutzungsvorrichtungen zu koppeln.

Gemäß einer weiteren Ausführungsform der Erfindung wird ein Verfahren zum Erzeugen von Wasserstoff für Brennstoffzellen in einem Luftfahrzeug bereitgestellt mit den folgenden Verfahrensschritten: Zuführen mindestens eines ersten oder zweiten Reagenz über eine Reaktionskammer, wobei das erste Reagenz hydriertes Polysilan oder Mischungen davon umfasst und das zweite Reagenz Wasser ist, Umsetzen des ersten Reagenz mit dem zweiten Reagenz in der Reaktionskammer und Ableiten des bei der Umsetzung entstehenden Wasserstoffes zu einer Brennstoffzelle des Luftfahrzeuges.

Auf diese Weise kann einfach in einer Reaktionskammer aus einem einfach handhabbaren Wasserstoffenergieträger mit Wasser Wasserstoff erzeugt werden. Das entstandene reine Gas kann zu einer Brennstoffzelle abgeleitet werden und dort den Betrieb der Brennstoffzelle gewährleisten.

In der Reaktionskammer spalten die hydrierten Polysilane durch Hydrolyse Wasserstoff ab. Hydrierte Polysilane mit einer Kettenlänge von mindestens elf bis dreizehn Siliciumatomen (SiₙH₂ₙ₊₂ und/oder SiₙH₂ₙ; n > 10 bzw. n > 12), wie aus der DE 10 2006 043 929 A1 bekannt, haben eine feste Form unter Standardbedingungen und können einfach gelagert und gespeichert werden. Dabei kann in der Reaktionskammer das feste HPS vorgelegt werden und eine wässrige Lösung zugeführt werden.

Sicherheitstechnisch ist die Verwendung von HPS als Ausgangsstoff von Vorteil, da dieser Feststoff leicht gelagert und der Reaktionskammer zugeführt werden kann. Die hohe volumenspezifische Energiedichte der langkettigen Energieträger ist insbesondere im mobilen Bereich in der Luft bzw. Raumfahrt von besonderem Vorteil. Eine hohe Energiedichte bedeutet, dass das Tankvolumen und somit auch das Tankgewicht gering gehalten werden kann und somit Kosten eingespart werden können. Auf diese Weise kann mehr Nutzlast insbesondere mehr Fracht oder Passagiere im Flugzeug transportiert werden.

Da Polysilane mit Kettenlängen größer sechs bei Standardtemperatur unter Luftabschluss über sehr lange Zeit ohne Veränderung haltbar sind, können sie sehr gut als Energieträger in der Luftfahrt genutzt werden. Das HPS kann auch als Gemisch von hydrierten Polysilanen und/oder Gemisch von deren Konstitutionsisomeren vorliegen von beispielsweise einem Undecasilan Si₁₁H₂₃ mit höheren Polysilanen wie beispielsweise einem Pentadekasilan Si₁₅H₃₂. Das HPS kann aufgrund seiner festen Form leicht zwischengespeichert werden bzw. in der Reaktionskammer vorgelegt werden. Nach der Umsetzung des HPS in der Reaktionskammer mit einer wässrigen alkalischen Lösung kann Wasserstoff freigesetzt werden und Kieselsäureprodukte entstehen. Die festen oder flüssigen Reaktionsprodukte können kontinuierlich oder diskontinuierlich aus der Reaktionskammer abgetrennt werden. Bei der Abtrennung von Feststoffen kann eine geeignete Formgebung wie z.B. eine Trichterform des Reaktionsbehälters dazu dienen, anfallende Feststoffe zu sammeln und abzutrennen. Das gebildete Wasserstoffgas kann in die Brennstoffzelle direkt oder indirekt über einen Zwischenspeicher abgeleitet werden.

Gemäß einer weiteren Ausführungsform weist das Verfahren weiterhin folgende Verfahrensschritte auf: Einstellen des Prozesswassers auf einen basischen pH-Wert, Umsetzen der hydrierten Polysilane in Gegenwart von Metallkatalysatoren, Zwischenspeichern des erzeugten Wasserstoffes in einen Druckbehälter, Überwachen der Reinheit und/oder Menge des erzeugten Wasserstoffes mit einer Wasserstoffmessvorrichtung und Steuern der Menge des erzeugten Wasserstoffes durch die zugegebene Menge an Wasser.

Die wässrige Lösung in der Reaktionskammer wird auf pH-Wert größer 7 eingestellt, um die anschließende Hydrolyse zu beschleunigen. Das Einstellen des Prozesswassers auf einen basischen pH-Wert kann entweder in der Reaktionskammer selbst oder in dem Wasservorratsbehälter durch eine Zugabe von beispielsweise Natronlauge oder Kalilauge erfolgen. Dabei kann ein pH-Wert von etwa 10 eingestellt werden, um die Reaktion ausreichend zu beschleunigen.

Neben oder anstelle der Prozessführung der Hydrolyse unter basischen Bedingungen kann die Reaktion beschleunigt werden, indem weitere bzw. andere Katalysatoren zugegeben werden. Dabei können die Katalysatoren Übergangsmetalloxide sein. Da bei der Hydrolysereaktion Wärme freigesetzt wird, kann es auch vorkommen, dass sich Wasserdampf bildet, dieser könnte vor der Ableitung des Wasserstoffes zu der Brennstoffzelle beispielsweise durch Trocknung, einen geeigneten Separator oder Trocknungsmittel abgetrennt werden. Ein Separator kann auch dazu dienen, mitgerissene Basen-Aerosole abzutrennen. Auf diese Weise kann sehr reiner Wasserstoff für die Brennstoffzelle zur Verfügung gestellt werden. Der erzeugte Wasserstoff kann in einem geeigneten Druckbehälter zwischengespeichert werden, der sowohl regelbare Ablauf- bzw. Zulaufventile aufweist.

Weiterhin kann die Qualität und/oder Quantität des erzeugten Wasserstoffes dadurch kontrolliert werden, indem eine Wasserstoffmessvorrichtung zwischengeschaltet wird. Eine geeignete Messvorrichtung für die Messung von Wasserstoff stellt beispielsweise ein Gaschromatograph dar. In diesen Gaschromatograph kann Wasserstoffgas abgeleitet werden und anschließend unter Zuführung eines Trägergases mittels einer Trennsäule vermessen werden. Die Auswertung erfolgt dann über eine geeignete Auswerteeinrichtung, beispielsweise einen Computer, der die Menge an gemessenem Wasserstoffgas mit Hilfe der gemessenen Signale insbesondere der unter den Peaks liegenden Flächen ermittelt. Diese Messvorrichtung kann einerseits die Reinheit überprüfen und bei Unreinheiten die Zugabe von Wasserstoffgas an die Brennstoffzelle unterbinden. Andererseits ist es auch möglich quantitative Wasserstoffmessungen mit der Steuerung der Reaktionskammer zu verbinden, um beispielsweise die in der Brennstoffzelle benötigte Menge an Wasserstoff bereitstellen zu können.

Das Steuern der Menge des erzeugten Wasserstoffs kann beispielsweise über die Zugabe der Menge an Wasser erfolgen. Die Wassermenge kann von außen zugegeben werden, indem eine Pumpe das Wasser je nach Bedarf in die Reaktionskammer führt. Weiterhin kann das Wasser direkt von der Brennstoffzelle in die Reaktionskammer geführt werden. Auf diese Weise kann das Wasser wiederverwendet werden. Ferner kann auch die Menge des erzeugten Wasserstoffes durch die pH-Einstellung bzw. durch die Zugabe von basischer, bevorzugt alkalischer, Lösung gesteuert werden. Die Zugabe von basischer Lösung kann einerseits in der Reaktionskammer selbst als auch in dem Wasservorratsbehälter erfolgen. Da bei diesem Umsetzungsprozess in der Reaktionskammer nur reines HPS und Wasser bzw. basische wässrige Lösung verwendet wird, entsteht im Wesentlichen reines Wasserstoffgas, das sich insbesondere für PEM-Brennstoffzellen eignet.

Ferner sei darauf hingewiesen, dass die obigen Merkmale und Verfahrensschritte auch kombiniert werden können. Die Kombination der obigen Verfahrensschritte bzw. Merkmale kann zu wechselwirkenden Effekten und Wirkungen führen, die über die Einzelwirkungen der entsprechenden Merkmale hinausgeht, auch wenn dies nicht ausdrücklich im Detail beschrieben wird.

Beispielhafte Ausführungsformen der Erfindung werden im Folgenden mit Bezugnahme auf die folgenden Zeichnungen beschrieben.

### Kurze Beschreibung der Zeichnungen

**Fig. 1** zeigt eine schematische Ansicht einer Brennstoffzellenversorgungsvorrichtung zum Erzeugen von Wasserstoff.
**Fig. 2** zeigt ein weiteres Ausführungsbeispiel der Brennstoffzellenversorgungsvorrichtung mit einer Zuleitungsvorrichtung zur Rückführung des Wassers aus der Brennstoffzelle und einer Abwärmenutzungsvorrichtung.
**Fig. 3** zeigt eine zweidimensionale schematische Ansicht eines Flugzeuges mit zwei Ausführungsbeispielen der Erfindung.
**Fig. 4** zeigt eine schematische Ansicht eines Verfahrens zur Brennstoffzellenversorgung gemäß einem Ausführungsbeispiel der Erfindung.

### Detaillierte Beschreibung der Zeichnungen

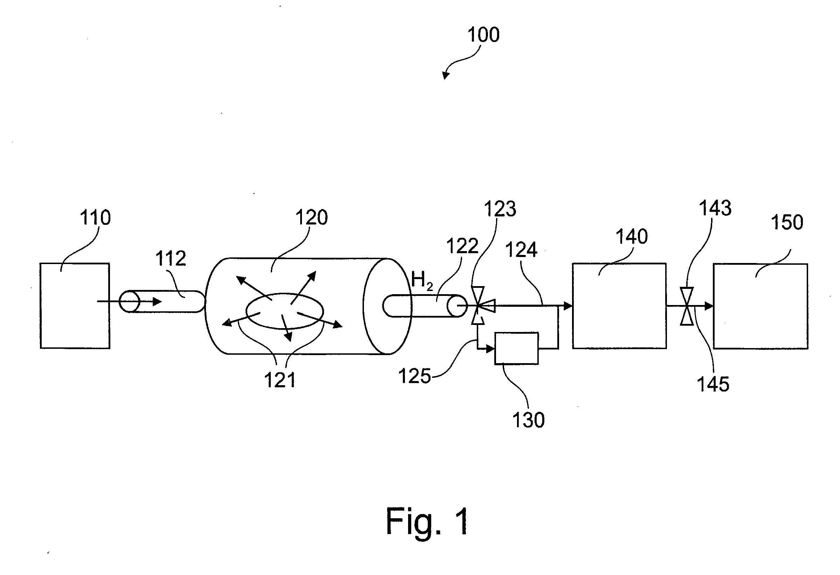

Die Darstellungen in den Figuren sind schematisch und nicht maßstäblich. Ferner werden in der folgenden Figurenbeschreibung für die gleichen oder ähnlichen Elemente die gleichen Bezugszeichen verwendet. Fig. 1 zeigt eine schematische Darstellung einer Brennstoffzellenversorgungsvorrichtung 100 mit einem Wasservorratsbehälter 110, einer Reaktionskammer 120 und einer Brennstoffzelle 150. Weiterhin zeigt die Fig. 1 eine Zuleitungsvorrichtung 112 zum Zuführen des Reagenz Wasser, das in dem Wasservorratsbehälter 110 zwischengespeichert werden kann.

Weiterhin weist die Reaktionskammer eine Ableitungsvorrichtung 122-124 auf, die zur Ableitung des bei der Umsetzung entstehenden Wasserstoffes in die Brennstoffzelle 150 verwendet werden kann. Diese Ableitungsvorrichtung umfasst auch ein Ventil 123 und eine Zuleitung von dem Ventil 123 zu einem Zwischenspeicher 140, in dem das Wasserstoffgas zwischengespeichert werden kann und über ein Ablaufventil 143 zur Brennstoffzelle über die Leitung 145 weitergeleitet werden kann. Der Zwischenspeicher für Wasserstoff kann in einem Druckbehälter 140 mit absperrsicheren Zulaufventilen bzw. Ablaufventilen 123 bzw. 143 realisiert werden. Ferner kann eine Trocknungs- oder Separatorvorrichtung 122 in die Ableitungsvorrichtung 122, 123, 124 installiert sein, um beispielsweise Wasserdampfreste, die bei der exothermen Reaktion (Pfeile 121) entstehen können, zu trocknen bzw. abzutrennen. Wird die Wärme, die bei der Hydrolysereaktion freigesetzt wird, nicht benötigt oder ist zu gering, kann alternativ eine Isolierung der Reaktionskammer bereitgestellt werden.

Weiterhin zeigt die Fig. 1 eine Ableitungsvorrichtung 122-124 mit einer Wasserstoffabzweigleitung 125. Diese Wasserstoffableitung kann als Bypass geschalten werden, um die Menge, Druck und/oder Reinheitsgrad des Wasserstoffes mit einer geeigneten Messvorrichtung 130 zu bestimmen.

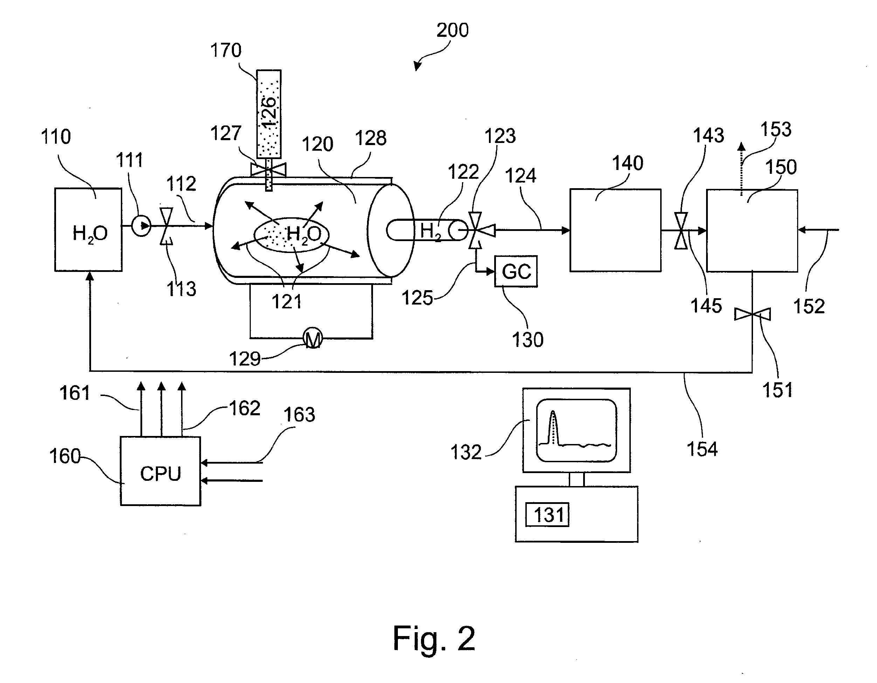

Fig. 2 zeigt eine weitere Ausführungsform der Erfindung 200 mit einem Wasservorratsbehälter 110, einer Reaktionskammer 120, einem Druckbehälter für den gewonnenen Wasserstoff 140 und einer Brennstoffzelle 150. Dabei kann vorteilhafterweise die bei der Umsetzung zu Wasserstoff freigesetzte Wärme, die durch die Pfeile 121 schematisch dargestellt wird, über eine geeignete Vorrichtung wie einen Reaktionskammermantel 128 gespeichert werden. Die erhaltene Wärme kann beispielsweise durch einen Wärmetauscher 129 weitergenutzt werden. Diese Abwärmenutzungsvorrichtung 129 kann auch an andere Wärmegewinnungsvorrichtungen, die beispielsweise bei der Brennstoffzelle 150 oder an einer parallel geschalteten Reaktionskammer angeordnet sind, gekoppelt sein (nicht dargestellt). Weiterhin zeigt Fig. 2 bei der Reaktionskammer schematisch eine Zuführung von hydrierten Polysilan 126 in Form von Kugeln. Das HPS 126 kann je nach Bedarf über eine Öffnung 127 in die Reaktionskammer zugeführt werden. Die Öffnung kann wiederverschließbar sein und der Vorratsbehälter 170 für das HPS 126 kann in einem anderen Raum separat gelagert werden. Nach Zuführung des HPS 126 in die Reaktionskammer 120 kann es beispielsweise in einem Sammelbehälter aus beispielsweise einem Gitter (in Fig. 1 angedeutet durch Ellipse), das vorzugsweise aus katalytisch wirkenden Metalloxiden besteht, gesammelt werden und dort mit Wasser zusammengeführt werden. Sind keine Sammelbehälter oder Zwischenböden vorgesehen kann das zunächst unlösliche HPS im gesamten Volumen der wässrigen Lösung mit Hilfe einer Umwälzpumpe (nicht dargestellt) verteilt werden.

In die Brennstoffzelle 150 wird über die Leitung 152 neben dem Wasserstoff das weitere Reaktionsgas Sauerstoff oder Luft eingeführt, das im Verlauf der in den Brennstoffzellen ablaufenden Reaktion nach der Gewinnung von elektrischer Energie zu Wasser reagiert. Bei der Brennstoffzelle 150 handelt es sich beispielsweise um den Typ PEM, wobei als Oxidationsmittel der Sauerstoff oder Luft mit ihrem Sauerstoffanteil über die Leitung 152 zugeführt wird, während das Reduktionsmittel räumlich durch eine Membran getrennt ist. Diese Protonenaustauschmembran ist ausschließlich für H⁺-Ionen durchlässig. Die gewonnene Energie bzw. die Stromerzeugung (angedeutet über den Pfeil 153) kann sofort genutzt werden. Das Reaktionsprodukt Wasser, was in der Brennstoffzelle anfällt, kann über das Ablaufventil 151 entweder in kondensierter Form oder in Wasserdampfform in die Leitung 154 eingespeist werden und zum Wasservorratsbehälter 110 weitergeleitet werden. Alternativ zu dieser Anordnung könnte das gewonnene Wasser in der Brennstoffzelle auch direkt in den Reaktionstank 120 geführt werden (nicht dargestellt).

In der Ableitungsvorrichtung, die zwischen der Reaktionskammer 120 und dem Druckbehälter 140 zur Zwischenspeicherung für Wasserstoff angeordnet ist, besteht wiederum eine Ableitungsvorrichtung bestehend aus den Teilen 122-124. In dieser Ausführungsform wird in der Abzweigungsleitung 125 ein Gaschromatograph 130 verwendet, der so arbeitet, dass zu der zu vermessenden Menge Wasserstoff ein Trägergas hinzugefügt wird und auf einer geeigneten Trennsäule die Bestandteile des Gasgemisches aufgetrennt werden. Am Ende der Säule können die vorhandenen Wasserstoffmengen oder andere Komponenten des Gemisches detektiert werden und mit Hilfe eines geeigneten Computersystems 131 ausgewertet werden. Die gemessenen Peaks können beispielsweise auf der Anzeigevorrichtung 132 angezeigt werden, wobei die Peakhöhe und die darunter liegende Fläche zur Bestimmung der Menge des gemessenen Wasserstoffes dient. Mit Hilfe der Auswerteeinheit 131 kann quantitativ und qualitativ eine sehr genaue Wasserstoffmessung stattfinden. Die Auswerteeinheit 131 ist einerseits mit dem Gaschromatograph 130 und andererseits mit der Steuereinheit des Computersystems 160 verbunden (Verbindungsleitungen nicht gezeigt in Fig. 1), um beispielsweise Messergebnisse über die Leitung 163 an die zentrale Computereinheit 160 mit einem Prozessor (CPU) weiterzuleiten. Ferner weist der Computer 160 eine Speichereinheit auf, der beispielsweise Messdaten wie Durchflussraten, Druck oder Ventilstellungen speichern kann, um bei Auftreten von Fehlern die Brennstoffzellenversorgungsvorrichtung überprüfen zu können.

Ferner kann mit Hilfe der Computereinheit 160 das Ventil 123 verschlossen werden oder das Ventil 143, wenn eine schlechte Qualität des Wasserstoffgases festgestellt wird. Weiterhin kann die Steuerung der Wasserzugabe über die Computereinheit 160 erfolgen oder die Förderpumpe 111 je nach Wasserbedarf eingestellt werden, um Wasser bzw. gegebenenfalls auch basische Lösung aus dem Vorratsbehälter 110 über die Zuleitungsvorrichtung 112 zu transportieren.

Ferner können weitere Messvorrichtungen angeordnet sein, die Messdaten an die Steuereinheit (über beispielsweise Pfeil 163) weiterleiten. Zum Beispiel kann in der Reaktionskammer oder dem Wasservorratsbehälter der pH-Wert gemessen werden oder der Füllstand an die Steuereinheit weitergeleitet werden. Über die Leitung 161 und 162 kann die Computereinheit 160 verschiedene Ventile, Pumpen oder andere Vorrichtungen ansteuern. Die Verbindungen zu den möglichen Sensoren oder Schnittstellen sind nicht in der Fig. 1 dargestellt.

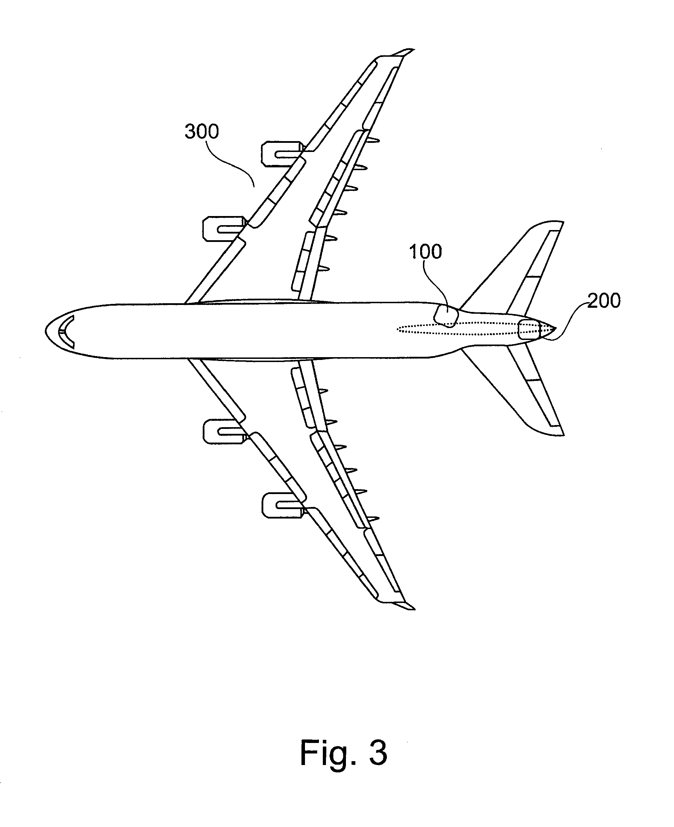

Fig. 3 zeigt eine schematische Ansicht eines Flugzeuges, in dem Brennstoffzellenversorgungsvorrichtungen 100 bzw. 200 verwendet werden.

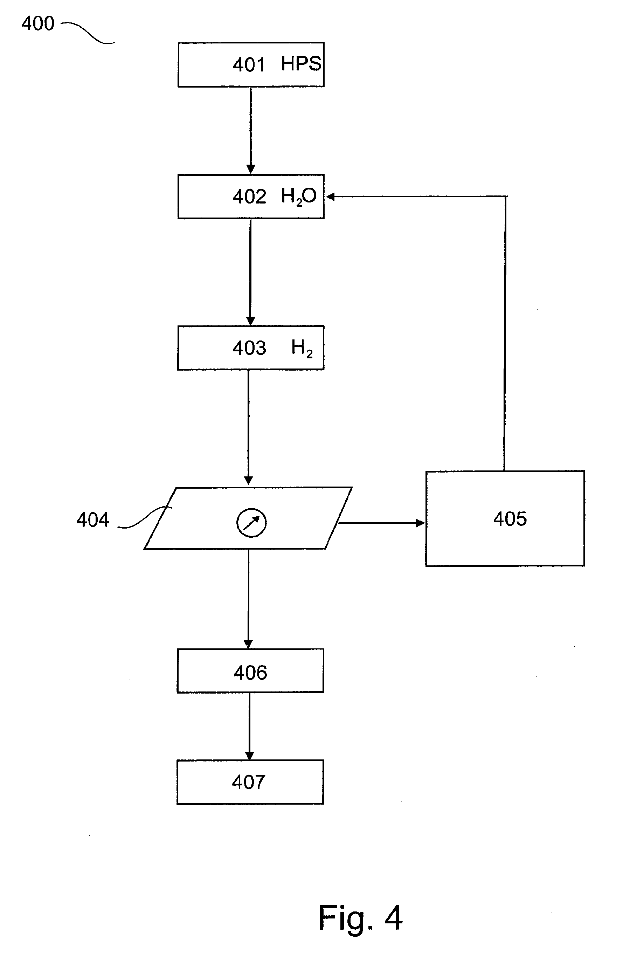

Fig. 4 zeigt eine schematische Ansicht eines Verfahrens zur Brennstoffzellenversorgung mit den folgenden Verfahrensschritten: Das Verfahren beginnt mit Schritt 401. In diesem Schritt wird eine Reaktionskammer bereitgestellt, in der möglicherweise ein Reagenz wie das hydrierte Polysilan bereitgestellt wird. Als nächster Verfahrensschritt 402 wird mindestens ein Reagenz in die Reaktionskammer geführt. Ist ein zweites Reagenz noch nicht in der Reaktionskammer vorgelegt, wird auch dieses Reagenz der Reaktionskammer zugeführt. Im Verfahrensschritt 403 wird das erste Reagenz HPS mit dem zweiten Reagenz Wasser umgesetzt.

Bei der Umsetzung entsteht gasförmiger Wasserstoff. Dieser Wasserstoff wird in Schritt 404 von einer Messvorrichtung (Wasserstoffmessvorrichtung) beispielsweise einem Gaschromatographen gemessen. Auf diese Weise kann die Reinheit des Wasserstoffgases überprüft werden. In Abhängigkeit von den Messergebnissen können bestimmte Regelparameter in der Reaktionskammer gesteuert werden. Im Verfahrensschritt 405 wird beispielhaft das Steuern der Menge des erzeugten Wasserstoffes durch die Regelung der zugegebenen Menge an Wasser dargestellt. Andere Steuervorgänge wie die Änderung des pH-Wertes oder Zugabe von Katalysatoren sind auch möglich.

In Verfahrensschritt 406 wird der erzeugte Wasserstoff in einem Druckbehälter zwischengespeichert. Die Steuerung der Zu- und Ablaufventile dieses Druckbehälters kann ebenfalls abhängig von dem im Verfahrensschritt 404 gemessenen Reinheitsgrad des Prozessgases erfolgen. Dabei sollte bei unreinem Wasserstoff die Zuleitung zur Brennstoffzelle unterbunden werden. Schließlich wird im Verfahrensschritt 407 der bei der Umsetzung entstandene und im Druckbehälter zwischengespeicherte Wasserstoff zu einer Brennstoffzelle beispielsweise des Typs PEM abgeleitet.

Es sei angemerkt, dass der Begriff "umfassend" weitere Elemente oder Verfahrensschritte nicht ausschließt, ebenso wie der Begriff "ein" und "eine" mehrere Elemente und Schritte nicht ausschließt. Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

## Patentansprüche

1. Luftfahrzeug (300) mit einer Brennstoffzellenversorgungsvorrichtung (100) zum Erzeugen von Wasserstoff
für Brennstoffzellen in einem Luftfahrzeug (300), die Brennstoffzellenversorgungsvorrichtung (100) aufweisend:
ein Wasserstoffspeichermaterial umfassend hydriertes Polysilan der allgemeinen Summenformel SiₙH₂ₙ oder SiₙH₂ₙ₊₂ mit n > 6 in fester Form;
eine Reaktionskammer (120) ausgelegt zum Umsetzen von hydrierten Polysilanen (126) oder Mischungen davon mit Wasser;
eine Zuleitungsvorrichtung (112) zum Zuführen mindestens eines Reagenz in die Reaktionskammer (120);
und
eine Ableitungsvorrichtung (122, 123, 124) zur Ableitung des bei der Umsetzung entstehenden Wasserstoffes zu einer Brennstoffzelle (150).

2. Das Luftfahrzeug nach Anspruch 1,
wobei hydrierte Polysilane (126) oder Mischungen davon in einer festen Struktur vorliegen, die ausgewählt ist aus der Gruppe bestehend aus:
Pulver;
Granulat,
Kugeln,
Würfel,
Pellets, und
poröse Stücke.

3. Das Luftfahrzeug nach einem der Ansprüche 1 bis 2,
wobei die Reaktionskammer ausgelegt ist, ein basisches Medium, vorzugsweise ein alkalisches Medium, bereitzustellen.

4. Das Luftfahrzeug nach einem der Ansprüche 1 bis 3,
wobei die Versorgungsvorrichtung (200) eine Abwärmenutzungsvorrichtung (129) aufweist, die bei der Umsetzung freigesetzte Wärme (121) nutzt.

5. Das Luftfahrzeug nach einem der Ansprüche 1 bis 4,
wobei die Zuleitungsvorrichtung (154) zur Kondensation und Zuleitung von Wasser zum Wasservorratsbehälter (110) ausgefuhrt ist, wobei das Wasser als Reaktionswasser in der Brennstoffzelle (150) entsteht.

6. Das Luftfahrzeug nach einem der Ansprüche 1 bis 5,
wobei die Ableitungsvorrichtung (122, 123, 124, 145) einen Druckbehälter (140) mit einem Zulaufventil (123) und einem Ablaufventil (143) zum Zwischenspeichem des erzeugten Wasserstoffs aufweist.

7. Das Luftfahrzeug nach einem der Ansprüche 1 bis 6,
wobei die Ableitungsvorrichtung (122, 123, 124) eine Wasserstoffmessvorrichtung (130) aufweist, die ausgelegt ist, die Qualität und/oder Quantität des erzeugten Wasserstoffes zu messen.

8. Das Luftfahrzeug nach einem der Ansprüche 1 bis 7,
wobei die Ableitungsvorrichtung (122, 123, 124) des erzeugten Wasserstoffes eine Abtrennungsvorrichtung (122) für Wasserdampfreste und/oder Aerosole aufweist.

9. Das Luftfahrzeug nach einem der Ansprüche 1 bis 8,
weiterhin aufweisend:
eine Steuervorrichtung (160);
wobei die Steuerungsvorrichtung (160) die Menge des erzeugten
Wasserstoffes durch die Menge des zugegebenen Wassers steuert.

10. Das Luftfahrzeug nach einem der Ansprüche 1 bis 9,
wobei das hydrierte Polysilan ein Si-Grundgerüst mit einer Anzahl an Si-Atomen im Molekül von n > 10, vorzugsweise n > 12 aufweist.

11. Das Luftfahrzeug nach einem der Ansprüche 1 bis 10,
wobei die Reaktionskammer (120) eine Mischvorrichtung für eine homogene Durchmischung umfasst.

12. Verwendung einer Brennstoffzellenversorgungsvorrichtung (100) umfassend
ein Wasserstoffspeichermaterial umfassend hydriertes Polysilan der allgemeinen Summenformel SiₙH₂ₙ oder SiₙH₂ₙ₊₂ mit n > 6 in fester Form;
eine Reaktionskammer (120) ausgelegt zum Umsetzen von hydrierten Polysilanen (126) oder Mischungen davon mit Wasser;
eine Zuleitungsvorrichtung (112) zum Zuführen mindestens eines Reagenz in die Reaktionskammer (120); und
eine Ableitungsvorrichtung (122, 123, 124) zur Ableitung des bei der Umsetzung entstehenden Wasserstoffes zu einer Brennstoffzelle (150) zur Wasserstoffversorgung von Brennstoffzellen (150) in
einem Luftfahrzeug (300).

13. Verwendung einer Brennstoffzellenversorgungsvorrichtung (100) umfassend
ein Wasserstoffspeichermaterial umfassend hydriertes Polysilan der allgemeinen Summenformel SiₙH₂ₙ oder SiₙH₂ₙ₊₂ mit n > 6 in fester Form;
eine Reaktionskammer (120) ausgelegt zum Umsetzen von hydrierten Polysilanen (126) oder Mischungen davon mit Wasser;
eine Zuleitungsvorrichtung (112) zum Zuführen mindestens eines Reagenz in die Reaktionskammer (120); und
eine Ableitungsvorrichtung (122, 123, 124) zur Ableitung des bei der Umsetzung entstehenden Wasserstoffes zu einer Brennstoffzelle (150)
als Notfallsystem für ein Luftfahrzeug, wobei bei einem Stromausfall der Standardstromversorgungssysteme die Stromversorgung mit hydriertem Polysilan für wichtige Systeme des Luftfahrzeugs sichergestellt ist.

14. Die Verwendung nach dem vorherigen Anspruch, wobei die Ventile der Brennstoffzellenversorgungsvorrichtung so ausgelegt sind, dass sie im Falle eines Stromausfalls die Stellung einnehmen, dass die Funktion der Brennstoffzellenversorgungsvorrichtung erhalten bleibt.

15. Verfahren zum Erzeugen von Wasserstoff aus hydriertem Polysilan der allgemeinen Summenformel SiₙH₂ₙ oder SiₙH₂ₙ₊₂ mit n > 6 in fester Form für Brennstoffzellen (150) in einem
Luftfahrzeug (300), aufweisend die folgenden Verfahrensschritte:
Zuführen mindestens eines ersten und zweiten Reagenz in eine Reaktionskammer (120),
wobei das erste Reagenz hydrierte Polysilane (126) oder Mischungen davon aufweist und das zweite Reagenz Wasser ist;
Umsetzen des ersten Reagenz (126) mit dem zweiten Reagenz in der Reaktionskammer (120); und
Ableiten des bei der Umsetzung entstehenden Wasserstoffes zu einer Brennstoffzelle (150) des Luftfahrzeugs.

## Claims

1. Aircraft (300) with a fuel cell supply device (100) for generating hydrogen for fuel cells in an aircraft (300), the fuel cell supply device (100) having:
a hydrogen storage material comprising hydrogenated polysilane of the general formula SiₙH₂ₙ or SiₙH₂ₙ₊₂, where n > 6, in solid form;
a reaction chamber (120) configured for reacting hydrogenated polysilanes (126) or mixtures thereof with water;
a feed device (112) for feeding at least one reactant into the reaction chamber (120);
and
a discharge device (122, 123, 124) for leading away the hydrogen that forms in the reaction to a fuel cell (150).

2. Aircraft according to Claim 1, wherein hydrogenated polysilanes (126) or mixtures thereof are present in a solid structure, which is selected from the group consisting of:
powder;
granules,
beads,
cubes,
pellets, and
porous pieces.

3. Aircraft according to one of Claims 1 and 2, wherein the reaction chamber is configured for providing a basic medium, preferably an alkaline medium.

4. Aircraft according to one of Claims 1 to 3, wherein the supply device (200) has a waste heat recuperator (129), which utilizes heat released in the reaction (121).

5. Aircraft according to one of Claims 1 to 4, wherein the feed device (154) is configured for condensation and feeding in of water to the water storage tank (110), wherein the water is formed as water of reaction in the fuel cell (150).

6. Aircraft according to one of Claims 1 to 5, wherein the discharge device (122, 123, 124, 145) has a pressure vessel (140) with an inlet valve (123) and an outlet valve (143) for intermediate storage of the hydrogen produced.

7. Aircraft according to one of Claims 1 to 6, wherein the discharge device (122, 123, 124) has a hydrogen measuring device (130), which is configured for measuring the quality and/or quantity of the hydrogen produced.

8. Aircraft according to one of Claims 1 to 7, wherein the discharge device (122, 123, 124) of the hydrogen produced has a separating device (122) for residual steam and/or aerosols.

9. Aircraft according to one of Claims 1 to 8, further comprising:
a control device (160);
wherein the control device (160) controls the amount of hydrogen produced by means of the amount of water added.

10. Aircraft according to one of Claims 1 to 9, wherein the hydrogenated polysilane has an Si backbone having a number of Si atoms in the molecule of n > 10, preferably n > 12.

11. Aircraft according to one of Claims 1 to 10, wherein the reaction chamber (120) comprises a mixing device for homogenous mixing.

12. Use of a fuel cell supply device (100) comprising
a hydrogen storage material comprising hydrogenated polysilane of the general formula SiₙH₂ₙ or SiₙH₂ₙ₊₂, where n > 6, in solid form;
a reaction chamber (120) configured for reacting hydrogenated polysilanes (126) or mixtures thereof with water;
a feed device (112) for feeding at least one reactant into the reaction chamber (120); and
a discharge device (122, 123, 124) for leading away the hydrogen that forms in the reaction to a fuel cell (150)
for hydrogen supply of fuel cells (150) in an aircraft (300).

13. Use of a fuel cell supply device (100) comprising
a hydrogen storage material comprising hydrogenated polysilane of the general formula SiₙH₂ₙ or SiₙH₂ₙ₊₂, where n > 6, in solid form;a reaction chamber (120) configured for reacting hydrogenated polysilanes (126) or mixtures thereof with water;
a feed device (112) for feeding at least one reactant into the reaction chamber (120); and
a discharge device (122, 123, 124) for leading away the hydrogen that forms in the reaction to a fuel cell (150)
as an emergency system for an aircraft, wherein, in a power outage of the standard power supply systems, the power supply with hydrogenated polysilane is ensured for important systems of the aircraft.

14. Use according to the preceding claim, wherein the valves of the fuel cell supply device are configured so that in the case of a power outage, they assume the position such that the operation of the fuel cell supply device is maintained.

15. Method of producing hydrogen from hydrogenated polysilane of the general formula SiₙH₂ₙ or SiₙH₂ₙ₊₂, where n > 6, in solid form for fuel cells (150) in an aircraft (300), having the following process steps:
feeding at least one first and second reactant into a reaction chamber (120),
wherein the first reactant has hydrogenated polysilanes (126) or mixtures thereof and the second reactant is water;
reacting the first reactant (126) with the second reactant in the reaction chamber (120); and
leading away the hydrogen that forms in the reaction to a fuel cell (150) of the aircraft.

## Revendications

1. Aéronef (300) comprenant un dispositif d'alimentation pour des piles à combustible (100) pour produire de l'hydrogène pour des piles à combustible dans un aéronef (300), le dispositif d'alimentation pour des piles à combustible (100) présentant :
un accumulateur d'hydrogène comprenant du polysilane hydrogéné de formule générale SiₙH₂ₙ ou SiₙH₂ₙ₊₂ avec n > 6 sous forme solide ;
une chambre de réaction (120) conçue pour faire réagir des polysilanes hydrogénés (126) ou des mélanges de ceux-ci avec de l'eau ;
un dispositif d'alimentation (112) pour alimenter au moins un réactif dans la chambre de réaction (120) ; et
un dispositif d'évacuation (122, 123, 124) pour évacuer l'hydrogène généré lors de la réaction vers une pile à combustible (150).

2. Aéronef selon la revendication 1,
dans lequel des polysilanes hydrogénés (126) ou des mélanges de ceux-ci se présentent dans une structure solide choisie parmi le groupe constitué de :
poudre ;
granulés,
billes,
cubes,
pellets, et
morceaux poreux.

3. Aéronef selon l'une quelconque des revendications 1 à 2,
dans lequel la chambre de réaction est conçue pour fournir un milieu basique, de préférence un milieu alcalin.

4. Aéronef selon l'une quelconque des revendications 1 à 3,
dans lequel le dispositif d'alimentation (200) présente un dispositif d'utilisation de la chaleur perdue (129) qui utilise la chaleur (121) libérée lors de la réaction.

5. Aéronef selon l'une quelconque des revendications 1 à 4,
dans lequel le dispositif d'alimentation (154) est réalisé pour condenser et alimenter de l'eau au réservoir d'eau (110), l'eau se présentant sous forme d'eau de réaction dans la pile à combustible (150).

6. Aéronef selon l'une quelconque des revendications 1 à 5,
dans lequel le dispositif d'évacuation (122, 123, 124, 145) présente un récipient sous pression (140) avec une soupape d'amenée (123) et une soupape de sortie (143) pour stocker temporairement l'hydrogène produit.

7. Aéronef selon l'une quelconque des revendications 1 à 6,
dans lequel le dispositif d'évacuation (122, 123, 124) présente un dispositif de mesure d'hydrogène (130) qui est conçu pour mesurer la qualité et/ou la quantité de l'hydrogène produit.

8. Aéronef selon l'une quelconque des revendications 1 à 7,
dans lequel le dispositif d'évacuation (122, 123, 124) de l'hydrogène produit présente un dispositif de séparation (122) pour les résidus de vapeur d'eau et/ou des aérosols.

9. Aéronef selon l'une quelconque des revendications 1 à 8,
présentant en outre :
un dispositif de commande (160) ;
le dispositif de commande (160) commandant la quantité d'hydrogène produit par la quantité d'eau ajoutée.

10. Aéronef selon l'une quelconque des revendications 1 à 9,
dans lequel le polysilane hydrogéné présente un squelette de Si ayant un certain nombre n d'atomes de Si dans la molécule, avec n > 10, de préférence n > 12.

11. Aéronef selon l'une quelconque des revendications 1 à 10,
dans lequel la chambre de réaction (120) comprend un dispositif de mélange pour effectuer un mélange homogène.

12. Utilisation d'un dispositif d'alimentation pour des piles à combustible (100) comprenant
un accumulateur d'hydrogène comprenant du polysilane hydrogéné de formule générale SiₙH₂ₙ ou SiₙH₂ₙ₊₂ avec n > 6 sous forme solide ;
une chambre de réaction (120) conçue pour faire réagir des polysilanes hydrogénés (126) ou des mélanges de ceux-ci avec de l'eau ;
un dispositif d'alimentation (112) pour alimenter au moins un réactif dans la chambre de réaction (120) ; et
un dispositif d'évacuation (122, 123, 124) pour évacuer l'hydrogène généré lors de la réaction vers une pile à combustible (150),
pour l'alimentation d'hydrogène à des piles à combustible (150) dans un aéronef (300).

13. Utilisation d'un dispositif d'alimentation pour des piles à combustible (100) comprenant un accumulateur d'hydrogène comprenant du polysilane hydrogéné de formule générale SiₙH₂ₙ ou SiₙH₂ₙ₊₂ avec n > 6 sous forme solide ;
une chambre de réaction (120) conçue pour faire réagir des polysilanes hydrogénés (126) ou des mélanges de ceux-ci avec de l'eau ;
un dispositif d'alimentation (112) pour alimenter au moins un réactif dans la chambre de réaction (120) ; et
un dispositif d'évacuation (122, 123, 124) pour évacuer l'hydrogène généré lors de la réaction vers une pile à combustible (150),
en tant que système de secours pour un aéronef, où, dans le cas d'une panne de courant des systèmes d'alimentation en courant standard,
l'alimentation en courant est assurée avec du polysilane hydrogéné pour les systèmes importants de l'aéronef.

14. Utilisation selon la revendication précédente, dans laquelle les soupapes du dispositif d'alimentation pour des piles à combustible sont conçues de telle sorte qu'elles adoptent, dans le cas d'une panne de courant, une position telle que le fonctionnement du dispositif d'alimentation pour des piles à combustible soit maintenu.

15. Procédé pour produire de l'hydrogène à partir de polysilane hydrogéné de formule générale SiₙH₂ₙ ou SiₙH₂ₙ₊₂ avec n > 6 sous forme solide pour des piles à combustible (150) dans un aéronef (300), présentant les étapes de procédé suivantes :
alimentation d'au moins un premier et un deuxième réactif dans une chambre de réaction (120),
le premier réactif présentant des polysilanes hydrogénés (126) ou des mélanges de ceux-ci et le deuxième réactif étant de l'eau ;
réaction du premier réactif (126) avec le deuxième réactif dans la chambre de réaction (120) ; et
évacuation de l'hydrogène généré lors de la réaction vers une pile à combustible (150) de l'aéronef.
